# EUROPÄISCHE PATENTSCHRIFT

(11) **EP 1 082 217 B1**
(45) Veröffentlichungstag und Bekanntmachung des Hinweises auf die Patenterteilung: **05.06.2002**
(21) Anmeldenummer: 99917794.2
(22) Anmeldetag: 20.03.1999
(51) Int. Cl.: B32B 15/08, B32B 5/08, B32B 3/18, B64C 1/12, B64C 1/06

(54) **VERBUNDMATERIAL MIT EINEM VERSTÄRKTEN VERBINDUNGSBEREICH**
COMPOSITE MATERIAL WITH A REINFORCED CONNECTING AREA
MATERIAU COMPOSITE COMPRENANT UNE ZONE DE LIAISON RENFORCEE

(43) Veröffentlichungstag der Anmeldung: 14.03.2001
(73) Patentinhaber: DLR Deutsches Zentrum für Luft- und Raumfahrt e.V., 51147 Köln (DE)
(72) Erfinder: KOLESNIKOV, Boris, Dr., D-38104 Braunschweig (DE); WILMES, Holger, D-38102 Braunschweig (DE); HERRMANN, Axel, D-31228 Peine (DE); PABSCH, Arno, D-38110 Braunschweig (DE)
(74) Vertreter: Lins, Edgar, Dipl.-Phys. Dr.jur.
(86) Internationale Anmeldenummer: DE9900790
(87) Internationale Veröffentlichungsnummer: WO0056541

(56) Entgegenhaltungen:
- EP-A- 0 783 960
- US-A- 3 758 234
- US-A- 3 883 267

## Beschreibung

Die Erfindung betrifft ein Verbundmaterial bestehend aus einem Faserverbund einer Vielzahl von in einer Polymermatrix eingebetteten Faserschichten, von denen einige vorzugsweise Faserrichtungen aufweisen, die sich von Faserrichtungen anderer Faserschichten unterscheiden, und einem mit einem Verstärkungsmaterial mit hoher Lochleibungsfestigkeit gebildeten Verbindungsbereich, wobei ein Übergangsbereich zwischen dem Faserverbund und dem Verbindungsbereich ausgebildet ist, in dem Faserschichten auf das Verstärkungsmaterial des Verbindungsbereichs stoßen.

Moderne Faserverbunde mit einer polymeren Matrix, beispielsweise kohlenstoffaser- oder glasfaserverstärkte Kunststoffe (CFK oder GFK), weisen hohe Zug- und Druckfestigkeiten auf. Für die hohe Zug- und Druckfestigkeit sind Faserschichten mit in Zug- und Druckrichtung liegenden Faserrichtungen verantwortlich. Es ist gebräuchlich, einen Faserverbund mit bezüglich der Längsrichtung in 0°, 90° und +/- 45° o.ä. liegenden Faserrichtungen aufzubauen. Für eine hohe Zugfestigkeit liegt der Anteil der 0°-Schichten höher als die jeweiligen Anteile der übrigen Faserschichten mit anderen Faserrichtungen.

In aller Regel ist es erforderlich, derartig hergestellte Faserverbundbauteile mit anderen Bauteilen gleicher Art oder anderer Art zu verbinden. Dies geschieht häufig mit Hilfe von Bolzenverbindungen. Die für eine hohe Zug- und Druckfestigkeit verantwortlichen Faserschichten in 0°-Richtung weisen aber nur eine sehr geringe Lochleibungsfestigkeit auf. Eine verbesserte Lochleibungsfestigkeit ist durch einen erhöhten Anteil von schräg gerichteten Faserschichten (beispielsweise +/- 45°, +/- 30° o.ä.) zu erhalten, bei gleichem Querschnitt bzw. bei gleicher Dicke des Faserverbundes wird dadurch jedoch die Zugfestigkeit herabgesetzt.

Es ist daher bekannt, das Faserverbundmaterial mit einem Verbindungsbereich zu versehen, der mit einem Verstärkungsmaterial mit hoher Lochleibungsfestigkeit gebildet ist. Bekannt ist es beispielsweise, an den Faserverbund ein mono-lithisches oder auch geschichtetes Titanmaterial anzuschließen, wobei zur Verbesserung der Verbindung zwischen dem Faserverbund und dem Verstärkungsmaterial ein bezüglich der Schichten gestufter Anschluß hergestellt wird. Es ist daher bekannt, einen monolithischen metallischen Verbindungsbereich, beispielsweise aus Titan, an einer Anschlußkante mit jeweils gestuften Vorsprüngen zu versehen, die zur Mittelebene bezüglich der Höhe des Verbindungsbereichs symmetrisch sind, und entsprechend die Faserschichten des Faserverbunds anschließen zu lassen. Die Verbindung mit dem Faserverbund kann über die Polymermatrix oder über Klebstoffaufträge erfolgen.

Es ist ferner bekannt, den Verbindungsbereich mit metallischen Laminatschichten auszubilden, deren Dicke der Dicke der Faserschichten des Faserverbunds entspricht, so daß die abgestufte Ausbildung der Verbindung einfach zu realisieren ist.

Es ist ferner bekannt, in dem Verbindungsbereich den Verbund der Faserschichten untereinander aufzulösen und zwischen die voneinander separierten Faserschichten metallische Schichten einzuschieben, um die Lochleibungsfestigkeit zu erhöhen. Bekannt ist eine derartige Anordnung für ein Rohr aus einem Faserverbund, das im Verbindungsbereich einen konstanten Innendurchmesser, jedoch durch die eingefügten Metallschichten einen erweiterten Außendurchmesser aufweist.

Nachteilig an der letztgenannten Lösung ist eine notwendige Asymmetrie des Verbindungsbereichs gegenüber dem Faserverbund, wodurch Schwachstellen bei statischer und dynamischer Belastung produziert werden. Bei den übrigen Lösungen ist die Verbindung zwischen dem Faserverbund und dem Verbindungsbereich ausschließlich durch Scher- bzw. Adhäsionskräfte zwischen den Faserschichten und dem Verstärkungsmaterial bestimmt. Da derartige, auf Scherkräften beruhende Verbindungen nur eine begrenzte Zugfestigkeit aufweisen, wird durch den angebrachten Verbindungsbereich die erreichbare hohe Zugfestigkeit des Faserverbundes obsolet.

Der Erfindung liegt daher die Problemstellung zugrunde, ein Verbundmaterial der eingangs erwähnten Art so auszubilden, daß einschließlich des Verbindungsbereichs eine hohe Zugfestigkeit und im Verbindungsbereich eine hohe Lochleibungsfestigkeit erreichbar ist.

Ausgehend von dieser Problemstellung ist erfindungsgemäß ein Verbundmaterial der eingangs erwähnten Art dadurch gekennzeichnet, daß der Verbindungsbereich aus Schichten aus dem Verstärkungsmaterial und durch den Übergangsbereich in den Verbindungsbereich durchgehenden Faserschichten gebildet ist und daß in dem Übergangsbereich zwischen den durchgehenden Faserschichten nicht durchgehende Faserschichten auf entsprechende Schichten aus dem Verstärkungsmaterial stoßen.

Bei dem erfindungsgemäßen Verbundmaterial wird der Verbindungsbereich somit aus durchgehenden Faserschichten des Faserverbundes gebildet, die mit Schichten des Verstärkungsmaterials kombiniert sind. Dadurch gelingt es, im Verbindungsbereich eine hohe Lochleibungsfestigkeit durch das Verstärkungsmaterial und im Übergangsbereich eine hohe Zugfestigkeit durch die durchgehenden Faserschichten zu gewährleisten. Darüber hinaus kann vorzugsweise der Verbindungsbereich in derselben Dicke wie der Faserverbund ausgeführt sein, so daß das Entstehen irgendwelcher Asymmetrien beim Übergang vom Faserverbund zum Verbindungsbereich völlig vermieden werden kann.

Besonders bevorzugt ist es für das erfindungsgemäße Verbundmaterial, wenn die Stoßstellen zwischen den nicht durchgehenden Faserschichten und den Schichten des Verstärkungsmaterials in dem Übergangsbereich versetzt angeordnet sind. Der Versatz ist dabei vorzugsweise so ausgebildet, daß ausgehend von dem Faserverbund in dem Übergangsbereich zunächst Stoßstellen zwischen zur Festigkeit des Faserverbunds gegen eine Hauptbelastung, beispielsweise gegen Zug, am wenigsten beitragende Faserschichten (bei Zugbelastung die 90°-Schicht) und dem Verstärkungsmaterial ausgebildet sind und in Richtung auf den Verbindungsbereich Stoßstellen für Faserschichten mit zunehmender Bedeutung für die Festigkeit versetzt folgen. Ist beispielsweise eine hohe Zugfestigkeit relevant, bedeutet dies, daß zunächst Stoßstellen für die 90°-Schichten ausgebildet werden und daß anschließend Stoßstellen für beispielsweise +/- 45°-Schichten folgen und schließlich als letztes Stoßstellen zwischen 0°-Schichten und dem Verstärkungsmaterial gebildet sind. Dabei können auch innerhalb der einzelnen Gruppen der Stoßstellen nochmals Stufungen realisiert sein.

Besonders zweckmäßig ist es für das erfindungsgemäße Verbundmaterial, wenn die Faserschichten des Faserverbunds symmetrisch zur Mittelebene der Dicke des Faserverbunds angeordnet sind und wenn dann in dem Übergangsbereich die Stoßstellen ebenfalls jeweils symmetrisch zur Mittelebene der Dicke des Faserverbundes liegen. Auf diese Weise läßt sich eine Symmetrie auch bezüglich der Faserschichten über die Dicke des Faserverbundes bis in den Verbindungsbereich hin realisieren.

Im Verbindungsbereich sind vorzugsweise abwechselnd die durchgehenden Faserschichten und die Schichten aus dem Verstärkungsmaterial geschichtet. Auf diese Weise bleibt die gewünschte Symmetrie erhalten und es wird eine hohe Lochleibungsfestigkeit bei einer auch im Übergangsbereich verbleibenden hohen Festigkeit gegen die Hauptbelastung des Faserverbundes (insbesondere Zugfestigkeit) erreicht. Zweckmäßigerweise weisen die Faserschichten und die Schichten aus dem Verstärkungsmaterial alle eine gleiche Schichtdicke auf.

Die Schichtdicke der Faserschichten und der Schichten des vorzugsweise metallischen (Titan-) Verstärkungsmaterials liegt vorzugsweise zwischen 0,2 und 1 mm.

Aus den obigen Erläuterungen ergibt sich, daß zweckmäßigerweise diejenigen Faserschichten bis in den Verbindungsbereich durchgehen, die im Hinblick auf die Hauptbelastung des Faserverbundes am festesten sind. Die Hauptbelastung wird im allgemeinen eine Zugbelastung sein, so daß die durchgehenden Schichten im allgemeinen eine 0°-Faserrichtung aufweisen werden.

Bei der Verwendung von schrägen Faserrichtungen, insbesondere in einer 45°-Orientierung, ist es zweckmäßig, jeweils eine Faserschicht der Orientierung +α (0° < α < 90°) jeweils unmittelbar an einer Faserschicht der Orientierung -α anliegen zu lassen und so auszubilden, daß beide Faserschichten zusammen die Dicke einer 0°- oder 90°-Schicht aufweisen. Auch diese Anordnung dient der Erhaltung einer möglichst perfekten Ausgewogenheit des Faserverbundes bezüglich seiner Mittelebene.

Das erfindungsgemäße Verbundmaterial ist insbesondere für hochfeste Verbindungsanordnungen eines Flugzeuges geeignet, beispielsweise zur optimierten Kopplung von Stringern an einem Flügel.

Die Erfindung soll im folgenden anhand von in der Zeichnung dargestellten Ausführungsbeispielen näher erläutert werden.
Es zeigen:
- Figur 1 -: schematisch einen Schnitt durch ein Verbundmaterial mit einem Verbindungsbereich zur Herstellung einer Verbindung zu einem anschließenden Verbundmaterial gleicher Art
- Figur 2 -: einen Flugzeugflügel mit Stringern aus dem Verbundmaterial gemäß Figur 1

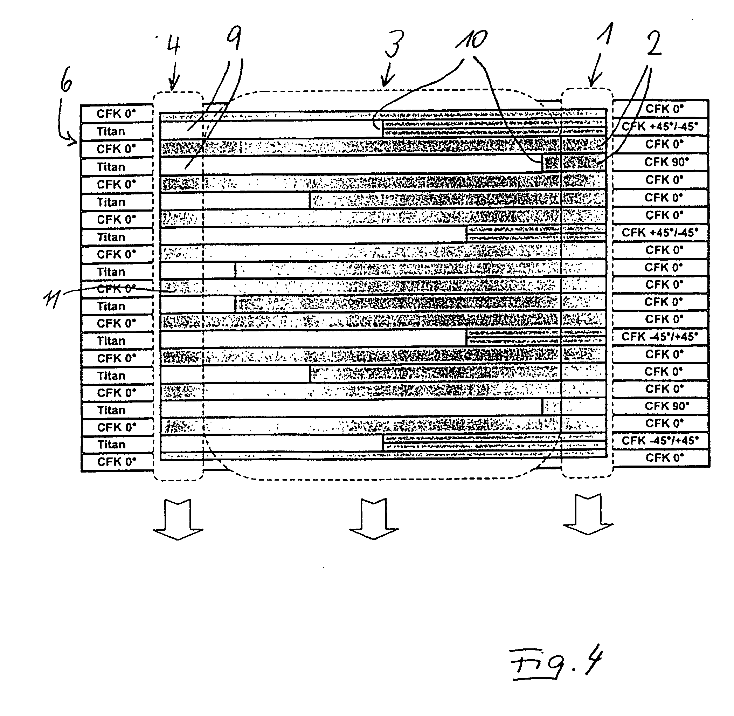

- Figur 3 -: eine vergrößerte Darstellung des Übergangsbereichs zwischen dem Faserverbund und dem Verbindungsbereich
- Figur 4 -: eine detaillierte, weiter vergrößerte Darstellung des Übergangsbereichs
- Figur 5 -: eine Graphik zur Darstellung von Zugfestigkeits- und Lochleibungsfestigkeitswerten für die beim Verbundmaterial verwendeten Materialien
- Figur 6 -: eine graphische Darstellung von Anschlußzugfestigkeitswerten für den erfindungsgemäßen Übergangsbereich im Vergleich zu zwei herkömmlich ausgebildeten Übergangsbereichen.

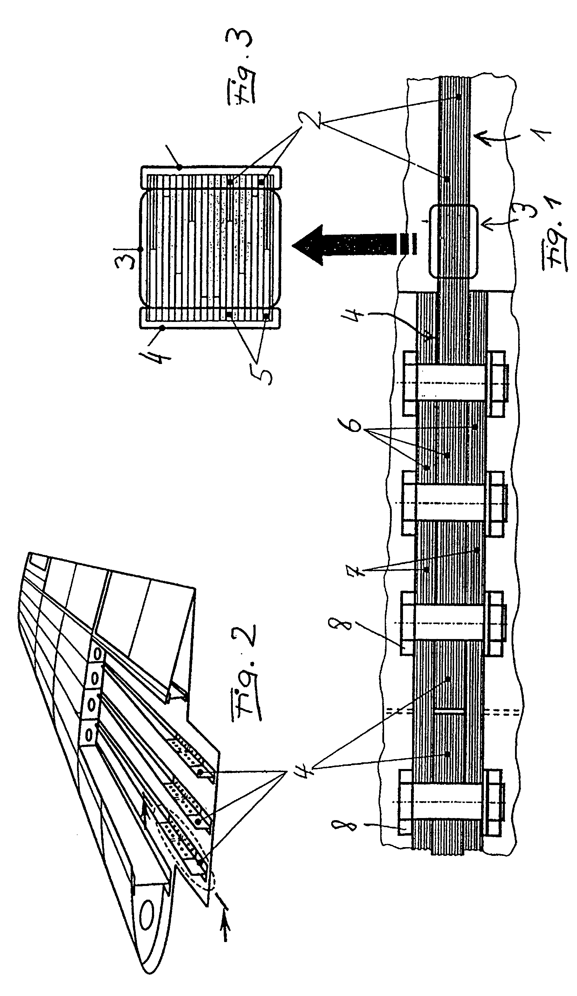

Figur 1 läßt einen Faserverbund 1 mit zahlreichen aufeinanderliegenden Faserschichten 2 erkennen.

Über einen Übergangsbereich 3 geht der Faserverbund 1 in einen Verbindungsbereich 4 über, in dem durch den Übergangsbereich 3 hindurchgehende Faserschichten 2 abwechselnd mit Metallschichten 5 ein Faser-Metall-Laminat 6 bilden. Der Verbindungsbereich 4 des Verbundmaterials wird zur Herstellung einer Verbindung mit einem Verbindungsbereich 4 eines zur Verlängerung angesetzten Verbundmaterials auf beiden Seiten von Laschen 7 begrenzt, die ebenfalls als Faser-Metall-Laminat 6 ausgebildet sind. Im Verbindungsbereich 4 ist das Verbundmaterial mit den Laschen 7 durch Bolzenverbindungen 8 verbunden. Da sich die Laschen 7 durchgehend in den Verbindungsbereich 4 des anschließenden Verbundmaterials erstrecken, und mit dem Verbindungsbereich 4 des benachbarten Verbundmaterials ebenfalls durch Bolzenverbindungen 8 verbunden sind, ergibt sich eine Verbindung zwischen den aneinander anschließenden Verbundmaterialien über die Laschen 7.

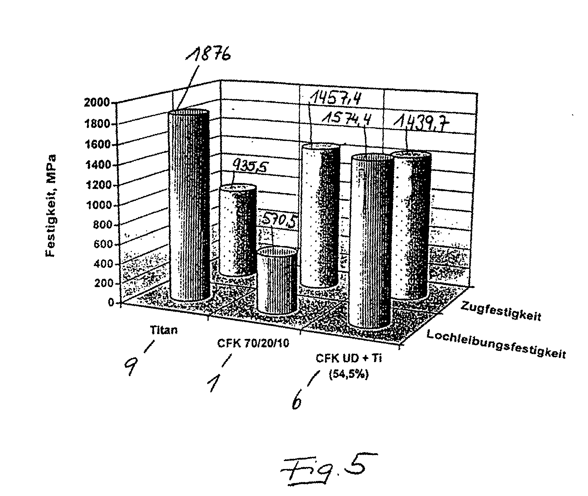

Figur 4 verdeutlicht den Aufbau des Übergangsbereichs 3 zwischen dem Faserverbund 1 und dem Verbindungsbereich 4.

Der Faserverbund 1 besteht aus Faserschichten 2. Der Faserverbund 1 ist hier ein 70/20/10-Faserverbund. Demzufolge besteht er aus 70 % mit der Faserrichtung 0°, 20 % mit der Orientierung +/- 45° und 10 % mit der Orientierung 90°.

Die Faserschichten 2 mit der Orientierung + 45° und - 45° liegen unmittelbar aufeinander und weisen jeweils nur die halbe Schichtdicke der übrigen Faserschichten 2 auf, so daß sie zusammen eine Faserschicht 2 mit der Schichtdicke der übrigen Faserschichten 2 bilden.

Figur 4 läßt erkennen, daß jeweils jede zweite Faserschicht 2 des Faserverbunds 1 einen 0°-Schicht ist und durch den Übergangsbereich 3 in den Verbindungsbereich 4 durchgehend ausgebildet ist. Im Verbindungsbereich 4 sind die zwischen den 0°-Faserschichten 2 liegenden Zwischenräume durch Schichten 9 aus einem Verstärkungsmaterial, hier eine Titanlegierung, ausgefüllt, so daß im Verbindungsbereich 4 das regelmäßige Faser-Metall-Laminat 6 gebildet ist.

Die Schichten 9 aus dem Verstärkungsmaterial erstrecken sich unterschiedlich weit in den Übergangsbereich 3 in Richtung Faserverbund 1 hinein und bilden dort Stoßstellen 10 mit nicht durchgehenden Faserschichten 2. Die Stoßstellen 10 sind nicht alle auf derselben Höhe in Längsrichtung sondern gesetzt angeordnet.

Ausgehend von dem Faserverbund 1 enden die beiden 90°-Faserschichten 2 zuerst und bilden erste Stoßstellen 10 aus.

Es folgen zwei Stoßstellen 10 der +45°/-45°-Faserschichten 2, die zwei weitere Stoßstellen 10 auf gleicher Höhe bilden.

Die beiden übrigen +45/-45°-Faserschichten, die weiter außen liegen, bilden eine dritte Höhe von Stoßstellen 10. Es folgen dann mit Abstand zwei Stoßstellen 10 zwischen zwei 0°-Faserschichten 2 und den Schichten 9 aus dem Verstärkungsmaterial und mit weiterem Abstand zwei weitere Stoßstellen 10.

Die Anordnung der Faserschichten 2 ist so erfolgt, daß eine 0°-Faserschicht 2 eine Mittelebene 11 des Verbundmaterials bildet. Um für eine vorgegebene Dicke des Fasverbundes 1 unter Erhaltung der Symmetrie die gewünschte 70/20/10 Zusammensetzung realisieren zu können, sind die beiden Faserschichten 2 an der Oberfläche (am Rand) durch 0°-Schichten halber Dicke gebildet.

Figur 5 zeigt im Vergleich Werte für die Zugfestigkeit und die Lochleibungsfestigkeit von reinen Titanschichten 9, von dem Faserverbund 1 aus CFK 70/20/10 und von dem erfindungsgemäßen Aufbau des Verbindungsbereichs 4 mit 0°-Faserschichten 2 (CFK UD) und Titanschichten 9 in dem Aufbau gemäß Figur 4.

Die Lochleibungsfestigkeit der üblicherweise verwendeten Titanlegierungen ist am höchsten und wäre für den reinen Faserverbund 1 extrem niedrig, so daß die Ausbildung einer Bolzenverbindung 8 mit dem reinen Faserverbund 1 nicht sinnvoll möglich wäre. Hingegen weist der Faserverbund 1 eine hohe Zugfestigkeit auf, die wesentlich höher ist als die Zugfestigkeit der Titanlegierung. Das Faser-Metall-Laminat 6 im Verbindungsbereich 4 weist eine gegenüber der Lochleibungsfestigkeit der Titanlegierung nur geringfügig verminderte Lochleibungsfestigkeit auf, während die Zugfestigkeit des Laminats 6 praktisch gleich hoch ist wie bei dem reinen Faserverbund 1.

Der erfindungsgemäß ausgebildete Verbindungsbereich 4 erfüllt somit die Forderungen nach einer hohen Zugfestigkeit und einer hohen Lochleibungsfestigkeit.

Angesichts dieses Ergebnisses bleibt noch zu untersuchen, ob die hohe Zugfestigkeit des Faserverbunds 1 und des Verbindungsbereichs 4 auch über den Übergangsbereich 3 erhalten bleibt.

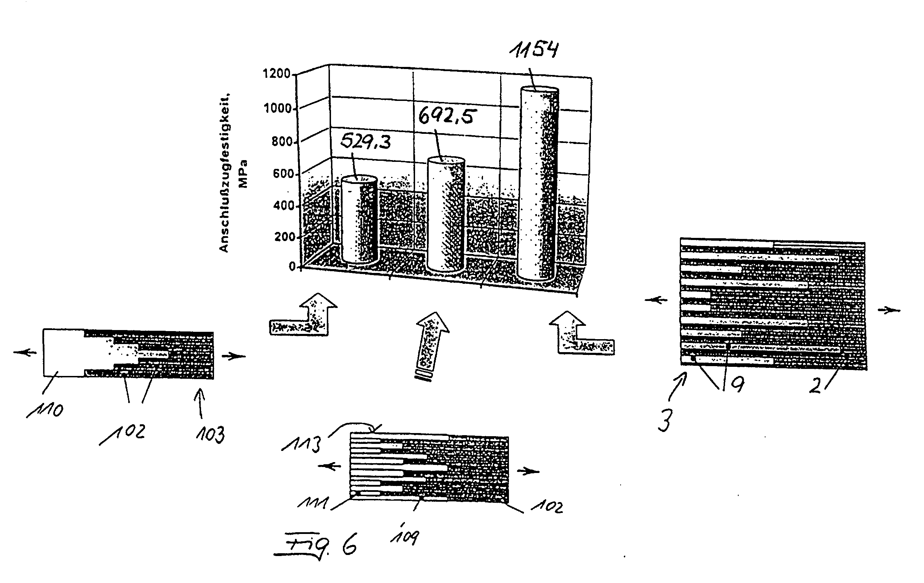

Figur 6 zeigt, daß in dem erfindungsgemäß ausgebildeten Übergangsbereich 3 erwartungsgemäß eine etwas verringerte Zugfestigkeit erreicht wird. Diese liegt aber größenordnungsmäßig im Bereich der Zugfestigkeit des Faserverbunds 1 und des Verbindungsbereichs 4.

Dies galt jedoch nicht für herkömmliche Lösungen.

In Figur 6 ist ein Übergangsbereich 103 dargestellt, in dem nach einer bekannten Lösung eine monolithisches Titanblech 110 mit einem abgestuften Ende versehen ist, an das sich Faserschichten 102 abgestuft anschließen. Die Anschlußzugfestigkeit dieser Lösung ist weniger als halb so groß wie bei dem erfindungsgemäßen Übergangsbereich 3.

Eine andere in Figur 6 skizzierte bekannte Lösung sieht einen Faserverbund aus Borfaserschichten 102 vor, die Stoßstellen mit Stahlfolien 109 bilden. Die Stahlfolien 109 sind durch Klebschichten 111 miteinander verbunden. Die Anschlußzugfestigkeit eines derartigen Übergangsbereichs 113 ist, wie die Graphik verdeutlicht, etwas höher als beim Übergangsbereich 103, beträgt jedoch nur etwa 60 % der Anschlußfestigkeit des erfindungsgemäßen Übergangsbereichs 3.

Das erfindungsgemäße Verbundmaterial vereinigt somit hohe Zugfestigkeitswerte, auch im Übergangsbereich 3, mit hohen Lochleibungsfestigkeiten im Verbindungsbereich 4.

## Patentansprüche

1. Verbundmaterial bestehend aus einem Faserverbund (1) einer Vielzahl von in einer Polymermatrix eingebetteten Faserschichten (2), von denen einige vorzugsweise Faserrichtungen aufweisen, die sich von Faserrichtungen anderer Faserschichten (2) unterscheiden, und einem mit einem Verstärkungsmaterial (9) mit hoher Lochleibungsfestigkeit gebildeten Verbindungsbereich (4), wobei ein Übergangsbereich (3) zwischen dem Faserverbund (1) und dem Verbindungsbereich (4) ausgebildet ist, in dem Faserschichten (2) auf das Verstärkungsmaterial (9) des Verbindungsbereichs (4) stoßen, **dadurch gekennzeichnet, daß** der Verbindungsbereich (4) aus Schichten (9) aus dem Verstärkungsmaterial und durch den Übergangsbereich (3) in den Verbindungsbereich (4) durchgehenden Faserschichten (2) gebildet ist und daß in dem Übergangsbereich (3) zwischen den durchgehenden Faserschichten (2) nicht durchgehende Faserschichten (2) auf entsprechende Schichten (9) aus dem Verstärkungsmaterial stoßen.

2. Verbundmaterial nach Anspruch 1, **dadurch gekennzeichnet, daß** die Stoßstellen (10) zwischen den nicht durchgehenden Faserschichten (2) und den Schichten (9) des Verstärkungsmaterials in dem Übergangsbereich (3) versetzt angeordnet sind.

3. Verbundmaterial nach Anspruch 2, **dadurch gekennzeichnet, daß** ausgehend von dem Faserverbund (1) in dem Übergangsbereich (3) zunächst Stoßstellen (10) zwischen zur Festigkeit des Faserverbundes (1) gegen eine Hauptbelastung am wenigsten beitragenden Faserschichten (2) und dem Verstärkungsmaterial (9) ausgebildet sind und in Richtung auf den Verbindungsbereich (4) Stoßstellen (10) für Faserschichten (2) mit zunehmender Bedeutung für die Festigkeit versetzt folgen.

4. Verbundmaterial nach einem der Ansprüche 1 bis 3, **dadurch gekennzeichnet, daß** die Faserschichten (2) des Faserverbundes (1) symmetrisch zur Mittelebene (11) der Dicke des Faserverbundes (1) angeordnet sind.

5. Verbundmaterial nach einem der Ansprüche 1 bis 4, **dadurch gekennzeichnet, daß** die Stoßstellen (1) jeweils symmetrisch zur Mittelebene (11) der Dicke des Faserverbundes (1) angeordnet sind.

6. Verbundmaterial nach einem der Ansprüche 1 bis 5, **dadurch gekennzeichnet, daß** in dem Verbindungsbereich (4) abwechselnd die durchgehenden Faserschichten (2) und die Schichten (9) aus dem Verstärkungsmterial geschichtet sind.

7. Verbundmaterial nach Anspruch 6, **dadurch gekennzeichnet, daß** die Faserschichten (2) und die Schichten (9) aus dem Verstärkungsmaterial alle eine gleiche Schichtdicke aufweisen.

8. Verbundmaterial nach einem der Ansprüche 1 bis 7, **dadurch gekennzeichnet, daß** die durchgehenden Faserschichten (2) durch im Hinblick auf eine Zugbelastung feste Faserschichten gebildet sind.

9. Verbundmaterial nach Anspruch 8, **dadurch gekennzeichnet, daß** die durchgehenden Faserschichten (2) mit einer bezüglich der Zugbelastung eine 0°-Richtung aufweisenden Faserrichtung gebildet sind.

10. Verbundmaterial nach einem der Ansprüche 1 bis 9, **dadurch gekennzeichnet, daß** in dem Faserverbund (1) ein Anteil von Schichten (2) mit einer 90°-Faserrichtung vorgesehen ist.

11. Verbundmaterial nach einem der Ansprüche 1 bis 10, **dadurch gekennzeichnet, daß** in dem Faserverbund (1) ein Anteil von Schichten (2) mit einer Faserrichtung von +/-45° vorgesehen ist.

12. Verbundmaterial nach einem der Ansprüche 1 bis 11, **dadurch gekennzeichnet, daß** Faserschichten (2) mit einer schrägen Faserorientierung (α) jeweils unmittelbar an einer Faserschicht (2) der zur Längsrichtung spiegelsymmetrischen Orientierung (-α) anliegen und daß beide Faserschichten (2) zusammen die Dicke einer 0°- oder 90°-Schicht aufweisen.

13. Verbundmaterial nach einem der Ansprüche 1 bis 12, **dadurch gekennzeichnet, daß** das Verstärkungsmaterial durch Metallschichten gebildet ist.

14. Verbundmaterial nach einem der Ansprüche 1 bis 13, **gekennzeichnet, durch** eine Schichtdicke der Faserschichten (2) und Schichten (9) aus dem Verstärkungsmaterial zwischen 0,2 und 1 mm.

## Claims

1. Composite material consisting of a fibre composite (1) of a plurality of fibre layers (2) embedded in a polymer matrix, some of which fibre layers preferably have fibre directions that differ from fibre directions of other fibre layers (2), and a joining region (4) formed with a reinforcing material (9) with a high hole soffit strength, wherein a transition region (3) is formed between the fibre composite (1) and the joining region (4) in which fibre layers (2) abut against the reinforcing material (9) of the joining region (4), **characterised in that** the joining region (4) is formed from layers (9) of the reinforcing material and by continuous fibre layers (2) passing through the transition region (3) into the joining region (4), and that in the transition region (3) non-continuous fibre layers (2) between the continuous fibre layers (2) abut against corresponding layers (9) of the reinforcing material.

2. Composite material according to claim 1, **characterised in that** the abutting points (10) between the non-continuous fibre layers (2) and the layers (9) of the reinforcing material are arranged in a staggered manner in the transition region (3).

3. Composite material according to claim 2, **characterised in that** starting from the fibre composite (1) abutting points (10) are first of all formed in the transition region (3) between fibre layers (2) contributing at least to the strength of the fibre composite (1) against a principal loading and the reinforcing material (9), and are followed in a staggered manner in the direction of the joining region (4) by abutting points (10) for fibre layers (2) of increasing importance for the strength.

4. Composite material according to one of claims 1 to 3, **characterised in that** the fibre layers (2) of the fibre composite (1) are arranged symmetrically relative to the mid plane (11) of the thickness of the fibre composite (1).

5. Composite material according to one of claims 1 to 4, **characterised in that** the abutting points (1) are in each case arranged symmetrically relative to the mid plane (11) of the thickness of the fibre composite (1).

6. Composite material according to one of claims 1 to 5, **characterised in that** in the joining region (4) the continuous fibre layers (2) and the layers (9) of the reinforcing material are arranged alternately.

7. Composite material according to claim 6, **characterised in that** the fibre layers (2) and the layers (9) of the reinforcing material all have the same layer thickness.

8. Composite material according to one of claims 1 to 7, **characterised in that** the continuous fibre layers (2) are formed by fibre layers that are resistant with regard to a tensile load.

9. Composite material according to claim 8, **characterised in that** the continuous fibre layers (2) are formed having a fibre direction aligned at 0° relative to the tensile load.

10. Composite material according to one of claims 1 to 9, **characterised in that** in the fibre composite (1) a proportion of layers (2) are provided with a 90° fibre alignment.

11. Composite material according to one of claims 1 to 10, **characterised in that** in the fibre composite (1) a proportion of layers (2) are provided with a fibre alignment of ± 45°.

12. Composite material according to one of claims 1 to 11, **characterised in that** fibre layers (2) with an inclined fibre orientation (α) in each case directly abut a fibre layer (2) having a mirror-symmetrical orientation (-α) relative to the longitudinal direction, and that both fibre layers (2) together have the thickness of a 0°-layer or a 90°-layer.

13. Composite material according to one of claims 1 to 12, **characterised in that** in the reinforcing material is formed by metal layers.

14. Composite material according to one of claims 1 to 13, **characterised in that** the layer thickness of the fibre layers (2) and layers (9) of the reinforcing material is between 0.2 and 1 mm.

## Revendications

1. Matériau composite constitué d'un composite fibreux (1) de plusieurs couches de fibres (2) noyées dans une matrice polymère, dont certaines couches présentent de préférence des directions de fibre qui diffèrent de directions de fibre d'autres couches de fibres (2), et d'une zone de liaison (4) constituée d'un matériau de renforcement (9) à grande résistance en paroi de trou, une zone de transition (3) étant constituée entre le composite fibreux (1) et la zone de liaison (4), dans laquelle des couches de fibres (2) sont aboutées contre le matériau de renforcement (9) de la zone de liaison (4), **caractérisé en ce que** la zone de liaison (4) est constituée par des couches (9) du matériau de renforcement et par des couches de fibres (2) continuées dans la zone de liaison (4) à travers la zone de transition (3), et **en ce que** dans la zone de transition (3), des couches de fibres non continuées (2) sont aboutées contre des couches correspondantes (9) en matériau de renforcement, entre les couches de fibres (2) continuées.

2. Matériau composite selon la revendication 1, **caractérisé en ce que** les points d'aboutement (10) entre les couches de fibres non continuées (2) et les couches (9) du matériau de renforcement sont disposés décalés dans la zone de transition (3).

3. Matériau composite selon la revendication 2, **caractérisé en ce qu'**en partant du composite fibreux (1) dans la zone de transition (3), sont d'abord réalisés des points d'aboutement entre le matériau de renforcement (9) et des couches de fibres (2) contribuant le moins à la résistance du composite fibreux (1) à l'encontre d'une charge principale, suivis de manière décalée en direction de la zone de liaison (4) par des points d'aboutement (10) pour des couches de fibres (2) de plus en plus importantes pour la résistance.

4. Matériau composite selon l'une des revendications 1 à 3, **caractérisé en ce que** les couches de fibres (2) du composite fibreux (1) sont agencées symétriquement par rapport au plan médian (11) de l'épaisseur du composite fibreux (1).

5. Matériau composite selon l'une des revendications 1 à 4, **caractérisé en ce que** les points d'aboutement (10) sont agencés symétriquement par rapport au plan médian (11) de l'épaisseur du composite fibreux (1).

6. Matériau composite selon l'une des revendications 1 à 5, **caractérisé en ce que** dans la zone de liaison (4) les couches de fibres continuées (2) et les couches (9) de matériau de renforcement sont empilées alternativement.

7. Matériau composite selon la revendication 6, **caractérisé en ce que** les couches de fibres (2) et les couches (9) en matériau de renforcement ont toutes une même épaisseur de couche.

8. Matériau composite selon l'une des revendications 1 à 7, **caractérisé en ce que** les couches de fibres continuées (2) sont constituées par des couches de fibres rigides à l'égard d'une contrainte de traction.

9. Matériau composite selon la revendication 8, **caractérisé en ce que** les couches de fibres continuées (2) sont constituées par des couches de fibres présentant une direction 0° par rapport à la contrainte de traction.

10. Matériau composite selon l'une des revendications 1 à 9, **caractérisé en ce que** dans le composite fibreux (1) il est prévu une partie de couches (2) avec une direction de fibres à 90°.

11. Matériau composite selon l'une des revendications 1 à 10, **caractérisé en ce que** dans le composite fibreux (1) il est prévu une partie de couches (2) avec une direction de fibres à +/- 45°.

12. Matériau composite selon l'une des revendications 1 à 11, **caractérisé en ce que** des couches de fibres (2) avec une orientation oblique des fibres (α) sont chacune directement adjacentes à une couche de fibres (2) d'orientation (-α) symétrique par rapport à la direction longitudinale, et **en ce que** les deux couches de fibres (2) présentent ensemble l'épaisseur d'une couche à 0° ou 90°.

13. Matériau composite selon l'une des revendications 1 à 12, **caractérisé en ce que** le matériau de renforcement est constitué par des couches métalliques.

14. Matériau composite selon l'une des revendications 1 à 13, **caractérisé en ce que** les couches de fibres (2) et les couches (9) en matériau de renforcement ont une épaisseur de couche comprise entre 0,2 et 1mm.
